# FASCICULE DE BREVET EUROPEEN

(11) **EP 1 683 677 B1**
(45) Date de publication et mention de la délivrance du brevet: **12.03.2008**
(21) Numéro de dépôt: 06300063.2
(22) Date de dépôt: 24.01.2006
(51) Int. Cl.: B60N 2/00, B60R 21/01, G01G 19/414, B60N 2/02, B60N 2/16

(54) **Détecteur d'occupation d'un siège et véhicule équipé d'un tel détecteur**
Sitzbelegungsdetektor und mit solchem Detektor ausgerüstetes Fahrzeug
Seat occupancy detector and vehicle equiped with such a detector

(30) Priorité: 25.01.2005 FR 0500754
(43) Date de publication de la demande: 26.07.2006
(73) Titulaire: Peugeot Citroën Automobiles, 78140 Vélizy-Villacoublay (FR)
(72) Inventeur: Certin, Laurent, 75015, Paris (FR); Berthet, Stéphane, 75017, Paris (FR); Sol, Bénédicte, 91190, GIif sur Yvette (FR)
(74) Mandataire: Fernandez, Francis Lionel

(56) Documents cités:
- EP-A- 0 670 239
- EP-A- 0 721 863
- WO-A-98/34205
- WO-A-99/08078
- WO-A-03/099617
- FR-A- 2 802 634
- US-B1- 6 308 140

## Description

L'invention concerne un détecteur d'occupation d'un siège à réglages électriques dans un véhicule automobile ainsi qu'un véhicule automobile équipé d'un tel détecteur.

Les équipements des véhicules automobiles sont développés selon deux axes principaux, à savoir la sécurité et le confort. Pour nombre d'équipements des véhicules automobiles, il s'agit de développer des équipements en tenant compte à la fois du confort et de la sécurité des utilisateurs des véhicules automobiles. A cette dernière catégorie appartiennent les sièges d'un véhicule automobile.

Pour optimiser l'efficacité des mesures passives de protection et de sécurité des utilisateurs d'un véhicule automobile, par exemple pour régler la tension d'une ceinture de sécurité, il convient de prendre en compte le poids des utilisateurs. Dans le cadre de la présente invention, on considère comme utilisateur d'un véhicule aussi bien le conducteur que l'un ou l'autre des passagers assis sur le siège à côté du conducteur ou sur un autre siège individuel à réglages électriques d'un véhicule.

Les premiers systèmes destinés à mesurer le poids d'un occupant d'un siège utilisent des nappes de pression ou des capteurs de poids intégrés dans des fixations du siège. De tels moyens sont parfois difficiles à intégrer dans un siège, notamment lorsque le siège a une forme particulière ou répond à des critères de confort particuliers. De plus, ces moyens indiquent le poids, sous quelque forme que ce soit, mais ne sont en général pas faits pour être reliés à des moyens de réglage ou d'autres tâches utiles dans un véhicule automobile moderne.

Le document WO 99/080708 décrit un système destiné à mesurer le poids d'un occupant d'un siège à réglages électriques. Le siège comporte un moteur électrique permettant notamment d'ajuster le siège verticalement. Le siège comporte également un capteur de courant qui enregistre le courant consommé par le moteur électrique lorsque celui-ci est ajusté par l'occupant du siège et un analyseur d'harmoniques qui permet d'attribuer un poids à une valeur de courant mesurée. Néanmoins, il n'est pas aisé d'associer, pour chaque valeur poids attribuée, des mesures passives de sécurité et de protection appropriées.

Le but de l'invention est donc de développer un autre système capable de mesurer le poids présent sur un siège automobile.

Avantageusement, le système doit être facile à intégrer, être de préférence peu coûteux, et fournir des résultats de mesure fiables et répétables.

Le but de l'invention est atteint avec un siège de véhicule automobile comportant un détecteur d'occupation d'un siège à réglages électriques, le siège étant pourvu d'au moins un moteur électrique pour obtenir au moins un déplacement vertical du siège, et le détecteur comprenant au moins un capteur de courant permettant de mesurer le courant de fonctionnement du moteur lorsque le moteur est actionné.

Conformément à l'invention, le détecteur comprend en outre un analyseur d'harmoniques du courant de fonctionnement du moteur permettant d'attribuer différentes valeurs d'un poids présent sur le siège à différentes positions du premier harmonique du courant.

L'invention est particulièrement adaptée à des sièges à réglages électriques. Pour un tel siège, on calcule le poids qu'une charge présente sur ce siège exerce sur celui-ci en actionnant le moteur de déplacement vertical du siège et en observant les caractéristiques fréquentielles du courant qui le traverse.

Cette disposition de l'invention apporte plusieurs avantages et aide à satisfaire à la fois des exigences de sécurité et des exigences de confort.

En effet, différentes normes et réglementations nationales ou européennes exigent que les véhicules automobiles, principalement les véhicules dits de tourisme, mais aussi de plus en plus les véhicules industriels, soient équipés de dispositifs de sécurité de différentes natures. Il est cependant aisé de s'imaginer que les différents dispositifs, par exemple les ceintures de sécurité, n'ont pas besoin de développer les mêmes efforts de protection, lorsqu'il s'agit de protéger un [passager enfant...] passager enfant que lorsqu'il s'agit de protéger un passager adulte corpulent, pour obtenir la même efficacité de protection. Au contraire, pour rester avec l'exemple de la ceinture de sécurité, lorsqu'une ceinture de sécurité est réglée pour retenir efficacement une personne corpulente ayant un poids de plus de cent kilogrammes, cette même ceinture de sécurité protège bien sûr un enfant efficacement, mais en même temps elle risque de lui causer des lésions par la force de retenue ou, pour le moins, de causer un désagrément dû au manque de flexibilité par rapport à une autre ceinture de sécurité réglée selon le poids moins grand de l'enfant.

Il y a toutefois aussi la situation d'un petit enfant représentant lui-même un faible poids, mais présentant pour le siège un poids moins grand que celui d'un adulte faible du fait qu'il est assis sur un siège d'enfant (ou rehausseur) dont le siège du véhicule est équipé. Les mesures de sécurité doivent donc être réglées de manière à prendre en compte l'ensemble formé par l'enfant et son siège d'enfant.

C'est pour cette raison que, un peu plus haut, il a été précisé que le détecteur de l'invention mesure le poids qu'une charge exerce sur le siège.

Le détecteur de l'invention permet par ailleurs, par le poids qu'il mesure, de détecter la présence d'une charge sur le siège. Cette détection peut être utilisée pour activer ou, au contraire, inhiber, une certaine fonction du véhicule. A titre d'exemple, toujours par rapport à une ceinture de sécurité, sans pour autant limiter l'invention à des applications sur les ceintures de sécurité, on pourrait inhiber le démarrage du moteur, ou pour le moins le départ du véhicule, lorsque le détecteur constate la présence d'une charge sur un siège alors que la ceinture de sécurité correspondante n'est pas bouclée.

La mesure du poids peut être réalisée par l'initiative de l'utilisateur du véhicule ou automatiquement, par exemple au moment du bouclage de la ceinture de sécurité. Dans le premier cas, les équipements de sécurité sont réglés systématiquement pour protéger une personne présentant un poids assez important, vêtements et équipements éventuels compris, par exemple de l'ordre de cent cinquante kilogrammes. Lorsque l'utilisateur du véhicule estime présenter un poids nettement inférieur à celui qui est à la base du réglage standard, il initialise la mesure du poids.

Dans le second cas, le poids de l'utilisateur du véhicule, ou plus précisément le poids de l'utilisateur du siège concerné, est mesuré systématiquement et automatiquement au moment du bouclage de la ceinture de sécurité.

Pour obtenir le poids de la charge présente sur le siège, on observe la position du premier harmonique du courant traversant le moteur de déplacement vertical du siège. On détermine le poids de la charge en fonction de cette position. Pour éviter des influences falsifiantes du mécanisme de relevage du siège sur les résultats des mesures, la mesure est avantageusement effectuée alors que le siège est dans sa position la plus basse. De plus, il est envisageable d'effectuer la mesure plusieurs fois pour confirmer la classification en poids de la charge.

L'information discriminante est fournie par la fréquence correspondant au maximum de la transformée de FOURIER du courant sur la plage des fréquences allant, par exemple, de 150 à 500 Hertz. En effet, plus le poids d'une charge présente sur le siège est faible, et plus la fréquence correspondant à ce maximum de la transformée de FOURIER est élevée. De plus, cette corrélation est suffisamment robuste et permet de réaliser la classification de manière efficace. Bien que le détecteur de l'invention permette d'attribuer des valeurs individuelles d'un poids présent sur le siège à différentes positions individuelles du premier harmonique du courant, il est aisé de s'imaginer que, pour simplifier l'application de l'invention, on détermine un certain nombre de classes de poids et règle les différents dispositifs de sécurité et de protection du véhicule selon ces classes de poids.

La présente invention concerne également les caractéristiques ci-après :
- le détecteur comprend des éléments de calcul reliés à l'analyseur d'harmoniques et permettant de déterminer la fréquence correspondant au maximum de la transformée de FOURIER du courant de fonctionnement du moteur, le maximum étant représentatif d'un poids présent sur le siège ;
- le détecteur comprend un moyen de stockage de données permettant de tenir à disposition au moins un tableau de concordance entre différentes positions du premier harmonique du courant ou différents maxima de la transformée de FOURIER selon le courant de fonctionnement du moteur, d'une part, et des poids susceptibles d'être présent sur le siège, d'autre part, et un comparateur permettant de déterminer le poids présent sur le siège à l'aide des valeurs contenues dans le ou les tableaux de concordance ;
- le détecteur comprend des moyens de saisie permettant de modifier les valeurs du ou des tableaux de concordance ;
- le détecteur comprend des moyens de sélection permettant de choisir, parmi plusieurs tableaux de concordance stockés dans le moyen de stockage, celui qui correspond le mieux au type de charge exerçant un poids sur le siège ;
- le détecteur comprend un générateur de signal susceptible d'engendrer un signal représentatif de la présence ou de l'absence d'un poids sur le siège, la présence d'un poids sur le siège étant donnée à partir d'un poids minimal prédéterminé ;
- le générateur de signal est relié à des moyens d'autorisation destinés à inhiber ou à activer un ou plusieurs équipements du véhicule ;
- le détecteur comprend un répétiteur destiné à faire faire l'analyse du courant de fonctionnement un nombre prédéterminé de fois avant de déterminer le poids présent sur le siège ;
- le détecteur comprend des moyens destinés à forcer le siège dans une position de base avant le début des mesures du courant ;
- le détecteur comprend des moyens de stockage des résultats de mesure, ces moyens permettant de stocker le poids de charges habituels exerçant un poids sur le siège ;
- le détecteur comprend des moyens destinés à être reliés à une mémoire de commandes stockant des instructions/valeurs de réglages pour des équipements de sécurité passive susceptibles d'être réglés suivant le poids de charges habituelles exerçant un poids sur le siège.

Le détecteur de l'invention peut être réalisé avec des composants électroniques et circuits traditionnels selon le choix de celui qui met la présente invention en oeuvre. Pour cette raison, aucune conception particulière ni aucun schéma électrique ne sont indiqués dans la présente description de l'invention.

Le but de l'invention est également atteint avec un véhicule équipé d'un siège pourvu d'au moins un moteur électrique pour obtenir au moins un déplacement vertical du siège, le véhicule étant équipé d'un détecteur d'occupation d'un siège à réglages électriques ayant les caractéristiques décrites plus haut.

Selon le mode de réalisation choisi, le véhicule de l'invention peut comprendre :
- un siège à mémoire de position, cette mémoire permettant, après la mesure du poids et ensemble avec des moyens de réglage appropriés, de remettre le siège dans la position réglée avant la mesure, ou
- des moyens de réglage destinés à recevoir du détecteur d'occupation le poids de charges habituelles exerçant un poids sur le siège, ces moyens étant reliés à des moyens de saisie permettant à un utilisateur du véhicule d'obtenir un réglage automatique de la position du siège selon une charge habituelle.
   Le but de l'invention est aussi atteint avec un procédé de mesure d'un poids présent sur un siège à réglages électriques dans un véhicule automobile, comprenant les étapes de
- mesurer et échantillonner un courant traversant un moteur de déplacement vertical du siège,
- calculer la transformée de FOURIER du courant sur la plage de fréquences allant de 150 Hertz à 500 Hertz,
- déterminer l'amplitude de la fréquence correspondant au maximum de la transformée de FOURIER,
- comparer la fréquence ayant l'amplitude maximum à des seuils mémorisés dans le calculateur,
- déterminer le poids correspondant ou une catégorie de poids correspondante.

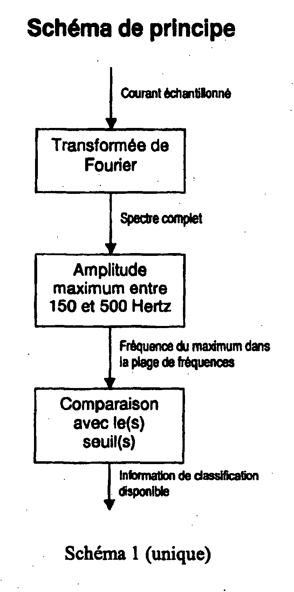

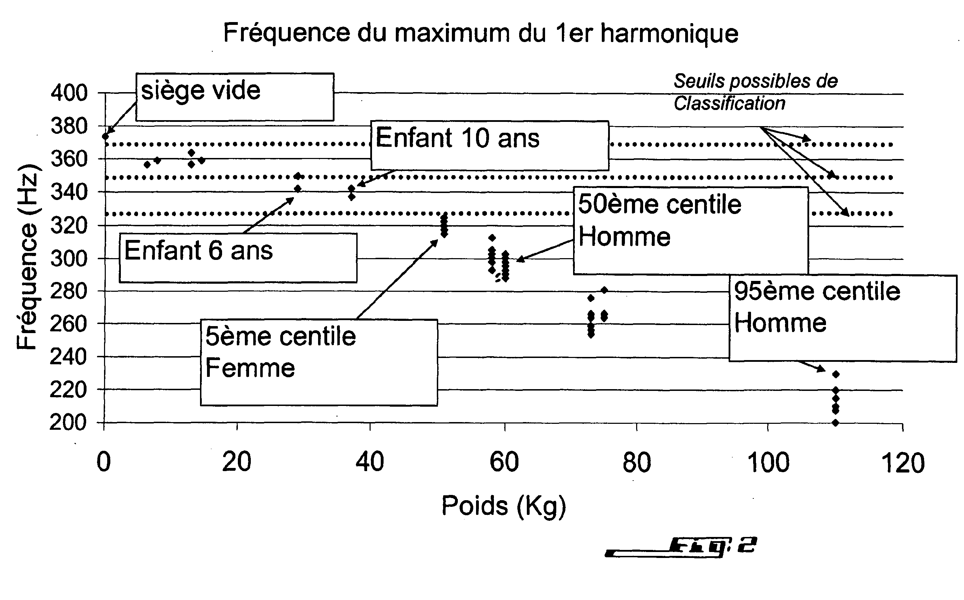

L'invention sera expliquée avec plus de détails ci-après en référence aux figures annexées et selon lesquelles :
- la figure 1 est un schéma représentant les principales étapes d'un procédé de mesure d'un poids présent sur un siège, tel qu'il est mis en oeuvre à l'aide du détecteur de l'invention ;
- la figure 2 est un diagramme représentant les fréquences des maximums de la transformée de FOURIER d'un courant mesuré,
- la figure 3 est un diagramme représentant les positions du premier harmonique du courant pour différents poids,
- la figure 4 est un diagramme représentant les fréquences des maxima du module de la transformée de FOURIER du courant enregistré, et
- la figure 5 est un diagramme représentant les fréquences correspondant aux maxima des premiers harmoniques du courant du diagramme objet de la figure 4.
   Pour mesurer le poids qu'une charge exerce sur un siège, on mesure le courant qui traverse un moteur de déplacement vertical du siège et on observe les caractéristiques fréquentielles de ce courant. Plus particulièrement, on détermine la position du premier harmonique du courant pour déterminer le poids du passager en fonction de cette position du premier harmonique. L'information discriminante est la fréquence correspondant au maximum de la transformée de FOURIER du courant sur une plage de fréquences allant, par exemple, de 150 Hertz à 500 Hertz, comme cela est résumé sur la figure 1 d'un procédé de mesure selon l'invention.
   Lorsque le spectre complet est calculé, on en extrait les amplitudes maximums de la transformée de FOURIER du courant sur une plage de fréquences allant de 150 Hertz à 500 Hertz. Un exemple pour un tel résultat est représenté sur la figure 2. Sur ce diagramme, les seuils permettent de différencier des pics correspondant à différents poids, et notamment les poids d'enfants et quelques poids d'adultes. Les différents points correspondent à plusieurs positions des jambes, ce qui influence la force appliquée au siège.

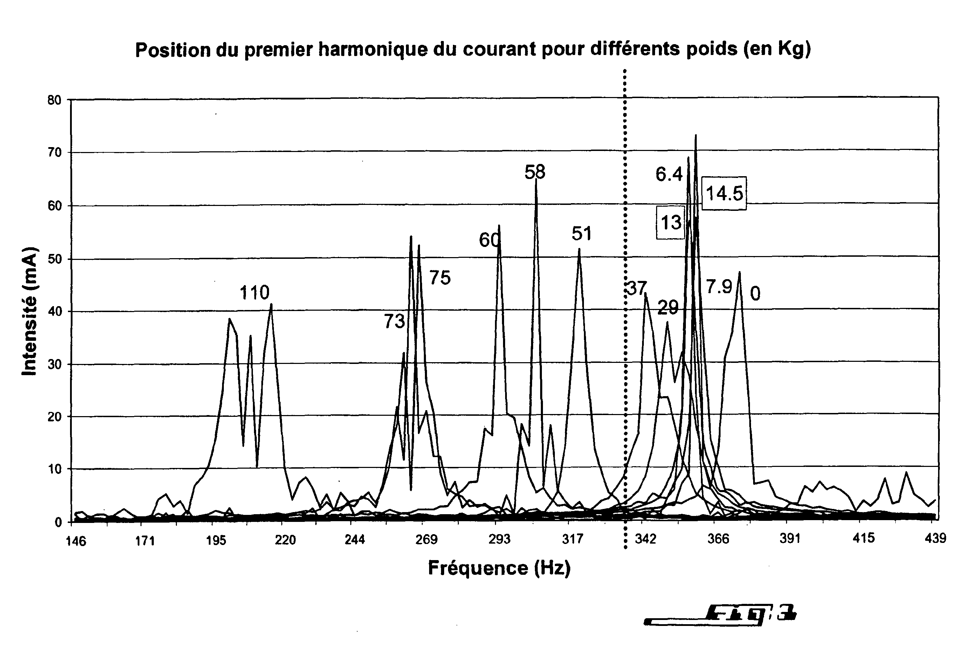

   La figure 3 représente les spectres de différents types de passagers, restreints à la plage de fréquences contenant le premier harmonique.
   Lorsqu'une action prédéterminée pour déclencher la mesure d'un poids exercé sur un siège est effectuée, par exemple lorsque la ceinture de sécurité attribuée au siège concerné est bouclée, un signal de commande est envoyé au moteur de réglage de la position verticale du siège. Le courant traversant ce moteur pendant l'action de relevage du siège est mesurée pendant au moins une seconde, le siège ayant été préalablement mis dans une position basse, par exemple la position la plus basse. Pour le courant mesuré et échantillonné, un calculateur effectue la transformation de FOURIER, de préférence la transformation rapide de FOURIER, et localise la fréquence correspondant au maximum de la transformée de FOURIER sur la plage fréquentielle déjà indiquée plus haut, à savoir entre 150 Hertz et 500 Hertz. La valeur de la fréquence est ensuite comparée à des seuils préalablement mémorisés dans une mémoire contenue dans le calculateur, ce qui permet de déterminer une catégorie de poids à laquelle la charge présente sur le siège appartient.
   S'agissant de mesurer le poids qu'une charge exerce sur un siège, en vue de régler des dispositifs de protection et de sécurité installés sur des véhicules automobiles, la fiabilité de la mesure doit être élevée et donc la précision du spectre à calculer doit être grande. Ceci nécessite d'obtenir une précision du spectre de 1 Hertz, ce qui entraîne la durée de la mesure d'au moins une seconde.
   En dehors des applications énoncées plus haut, par exemple celle de donner une certaine tension à une ceinture de sécurité équipant un siège dans un véhicule automobile, la mesure du poids qu'une charge présente sur un siège exerce sur celui-ci permet aussi, par exemple, un ajustement des seuils de poids pour mettre en oeuvre différentes stratégies de fonctionnement d'un airbag. Ces stratégies peuvent être, par exemple,
- activation/inhibition,
- activation/déploiement faible risque,
- activation/déploiement faible risque/inhibition.
   En dehors des fonctions de fourniture d'un critère de réglage d'un système de sécurité et de protection décrites ci avant, le détecteur d'occupation de l'invention peut fournir le poids présent sur un siège également pour réaliser des fonctions d'avertissement, telles que, par exemple, une fonction « témoin de non-bouclage de la ceinture de sécurité ».
   Pour réaliser cette fonction, on mesure le poids présent sur un siège avec les moyens et selon le procédé décrit plus haut, en actionnant le moteur de rehausse en montée et en analysant le courant qui le parcourt. A cet effet,
- on commande le moteur de rehausse en montée pendant 0,2 seconde ;
- une fois le régime transitoire passé, c'est-à-dire au bout d'environ 0,1 seconde, on enregistre, grâce à une passée de courant, le profil du courant traversant le moteur ;
- une fois le signal mémorisé dans un calculateur, on calcule la transformée de FOURIER par l'algorithme classique de la transformation rapide de FOURIER, puis on en calcule le module ;
- on localise le maximum d'amplitude de ce nouveau signal sur la plage de fréquences comprise entre 150 Hertz et 500 Hertz.

Ce résultat du calcul correspond à un poids présent sur le siège. Ce poids est comparé à un seuil prédéterminé. Si la valeur est supérieure au seuil prédéterminé, le siège est occupé et si la valeur est inférieure au seuil, le siège est inoccupé. Sur le plan du fonctionnement des calculateurs, on peut aussi partir de la valeur du maximum d'amplitude résultant des calculs. Puisque, comme évoqué plus haut déjà, plus le poids présent sur le siège est faible, et plus la fréquence correspondant au maximum de la transformée de FOURIER est élevée, on compare la valeur en Hertz résultant des calculs à un seuil prédéterminé : si la valeur est supérieure au seuil prédéterminé, le siège est inoccupé et si la valeur est inférieure au seuil, le siège est occupé. Le seuil peut être fixé, par exemple, à une valeur correspondant à un poids de 45 kilogrammes.

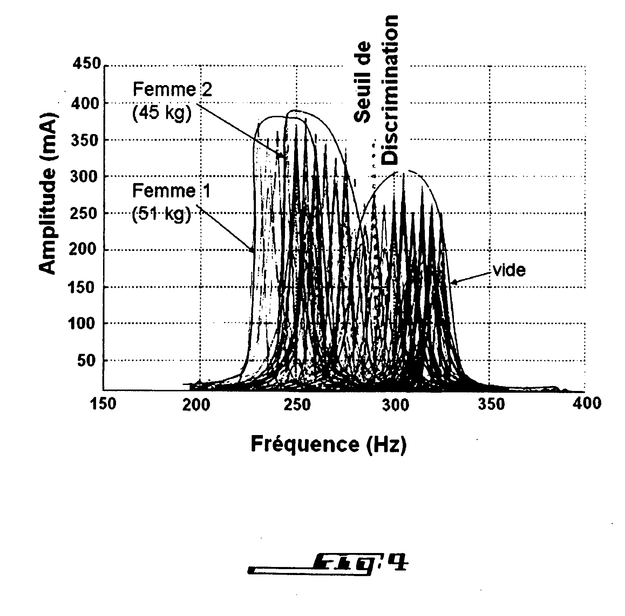

La figure 4 représente les fréquences des maximums du module de la transformée de FOURIER d'un courant enregistré, sur une plage allant de 150 Hertz à 500 Hertz. Le seuil, indiqué en pointillés, permet de différencier les pics correspondant à un siège vide de ceux correspondant à un poids supérieur à un poids prédéterminé auquel correspond le seuil indiqué. Dans l'exemple représenté sur la figure 4, le seuil correspond à un poids de 45 kilogrammes.

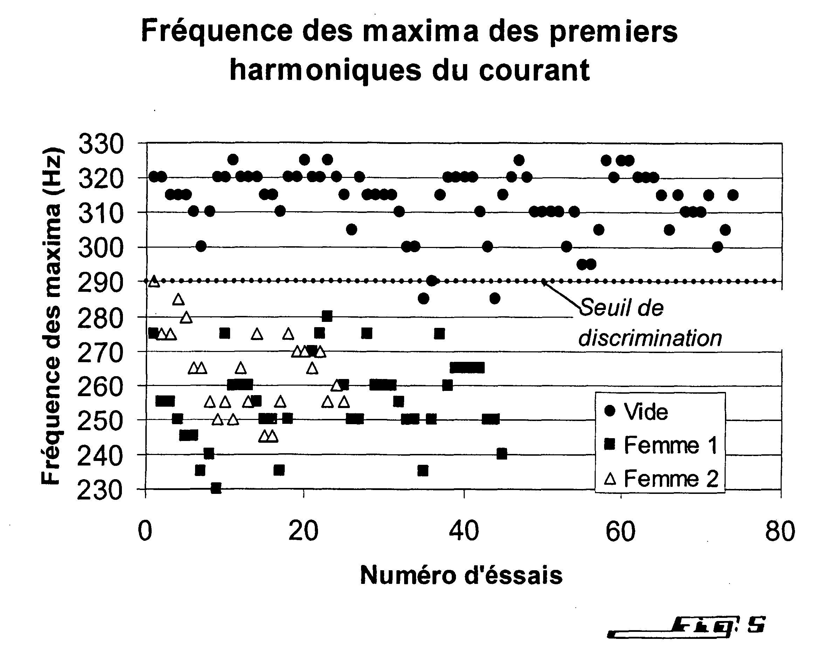

La figure 5 représente les fréquences des maximums des harmoniques représentés sur la figure 4. Ce diagramme montre que la discrimination entre les différents maxima des harmoniques est possible avec un taux d'erreur qui varie selon le choix du seuil. Ainsi, en choisissant le seuil à 290 Hertz, cent quarante des fréquences calculées sont justes, deux sont fausses et trois sont situées sur le seuil. Et lorsque l'on détermine le seuil à 283 Hertz, cent quarante-trois mesures sont justes et deux sont fausses.

Selon une application particulière du détecteur de l'invention, lorsque le véhicule franchit une limite de vitesse prédéterminée, par exemple de l'ordre de dix kilomètres par heure, et lorsque le détecteur de bouclage indique que la ceinture de sécurité n'est pas attachée sur le siège concerné, le moteur destiné aux déplacements verticaux du siège est actionné en montée. Le courant de ce dernier est analysé d'après la méthode décrite ci-dessus. Si le système détecte la présence d'un poids sur le siège, fréquence inférieure au seuil, un témoin de non-bouclage s'allume et, le cas échéant, une alerte sonore est déclenchée afin de signaler à l'utilisateur du véhicule que la ceinture de sécurité n'est pas bouclée alors qu'il y a une charge exerçant un poids sur le siège. Dans le cas contraire, aucune alarme n'est déclenchée.

Pour éviter que les valeurs mesurées soient falsifiées par des frottements ou des problèmes de transmission de la tringlerie du siège, la mesure du courant doit être effectuée lorsque le siège est dans une position basse, par exemple la position la plus basse. Si par contre le siège est dans une autre position, notamment si le siège est en position haute au moment d'effectuer la mesure du courant, un courant fort sera enregistré lors de la commande du moteur. Ce courant est caractéristique du blocage de l'arbre moteur puisque le siège se trouve en butée haute.

Pour prévenir un tel incident, on prévoit avantageusement dans l'algorithme de calcul que, lorsque le courant dépasse un seuil prédéterminé, par exemple de l'ordre de 5 ampères, le siège est rabaissé légèrement avant de recommencer la mesure.

## Revendications

1. Siège de véhicule automobile comportant un détecteur d'occupation d'un siège à réglages électriques, le siège étant pourvu d'au moins un moteur électrique pour obtenir au moins un déplacement vertical du siège, et le détecteur comprenant au moins un capteur de courant permettant de mesurer le courant de fonctionnement du moteur lorsque le moteur est actionné, et un analyseur d'harmoniques du courant de fonctionnement du moteur permettant d'attribuer différentes valeurs d'un poids présent sur le siège à différentes positions du premier harmonique du courant, **caractérisé en ce qu'**il comprend des éléments de calcul reliés à l'analyseur d'harmoniques et permettant de déterminer la fréquence correspondant au maximum de la transformée de FOURIER du courant de fonctionnement du moteur, le maximum étant représentatif d'un poids présent sur le siège.

2. Siège selon la revendication 1, **caractérisé en ce que** le détecteur comprend un moyen de stockage de données permettant de tenir à disposition au moins un tableau de concordance entre différentes positions du premier harmonique du courant ou différents maxima de la transformée de FOURIER selon le courant de fonctionnement du moteur, d'une part, et des poids susceptibles d'être présent sur le siège, d'autre part, et un comparateur permettant de déterminer le poids présent sur le siège à l'aide des valeurs contenues dans le ou les tableaux de concordance.

3. Siège selon la revendication 2, **caractérisé en ce que** le détecteur comprend des moyens de saisie permettant de modifier les valeurs du ou des tableaux de concordance.

4. Siège selon la revendication 2, **caractérisé en ce que** le détecteur comprend des moyens de sélection permettant de choisir, parmi plusieurs tableaux de concordance stockés dans le moyen de stockage, celui qui correspond le mieux au type de charge exerçant un poids sur le siège.

5. Siège selon l'une quelconque des revendications 1 à 4, **caractérisé en ce que** le détecteur comprend un générateur de signal susceptible d'engendrer un signal représentatif de la présence ou de l'absence d'un poids sur le siège, la présence d'un poids sur le siège étant donnée à partir d'un poids minimal prédéterminé.

6. Siège selon la revendication 5, **caractérisé en ce que** le générateur de signal est relié à des moyens d'autorisation destinés à inhiber ou à activer un ou plusieurs équipements du véhicule.

7. Siège selon l'une quelconque des revendications 1 à 6, **caractérisé en ce que** le détecteur comprend un répétiteur destiné à faire faire l'analyse du courant de fonctionnement un nombre prédéterminé de fois avant de déterminer le poids présent sur le siège.

8. Siège selon l'une quelconque des revendications 1 à 7, **caractérisé en ce que** le détecteur comprend des moyens destinés à forcer le siège dans une position de base avant le début des mesures du courant.

9. Siège selon l'une quelconque des revendications 1 à 8, **caractérisé en ce que** le détecteur comprend des moyens de stockage des résultats de mesure, ces moyens permettant de stocker le poids de charges habituels exerçant un poids sur le siège.

10. Siège selon l'une quelconque des revendications 1 à 9, **caractérisé en ce que** le détecteur comprend des moyens destinés à être reliés à une mémoire de commandes stockant des instructions/valeurs de réglages pour des équipements de sécurité passive susceptibles d'être réglés suivant le poids de charges habituelles exerçant un poids sur le siège.

11. Véhicule **caractérisé en ce qu'**il comprend un siège selon l'une quelconque des revendications 1 à 10.

12. Véhicule selon la revendication 11, **caractérisé en ce qu'**il comprend un siège à mémoire de position, cette mémoire permettant, après la mesure du poids et ensemble avec des moyens de réglage appropriés, de remettre le siège dans la position réglée avant la mesure.

13. Véhicule selon la revendication 11 ou 12,
**caractérisé en ce qu'**il comprend des moyens de réglage destinés à recevoir du détecteur d'occupation le poids de charges habituelles exerçant un poids sur le siège, ces moyens étant reliés à des moyens de saisie permettant à un utilisateur du véhicule d'obtenir un réglage automatique de la position du siège selon une charge habituelle.

14. Procédé de mesure d'un poids présent sur un siège à réglages électriques dans un véhicule automobile, comprenant un calculateur exécutant les étapes suivantes :
- mesurer et échantillonner un courant traversant un moteur de déplacement vertical du siège,
- calculer la transformée de FOURIER du courant sur la plage de fréquences allant de 150 Hertz à 500 Hertz,
- déterminer l'amplitude de la fréquence correspondant au maximum de la transformée de FOURIER,
- comparer la fréquence ayant l'amplitude maximum à des seuils mémorisés dans le calculateur,
- déterminer le poids correspondant ou une catégorie de poids correspondante.

## Claims

1. Motor vehicle seat comprising an occupancy detector for an electrically adjustable seat, the seat being provided with at least one electric motor so as to obtain at least one vertical displacement of the seat, and the detector comprising at least one current sensor making it possible to measure the operating current of the motor when the motor is actuated, and an analyzer of harmonics of the operating current of the motor making it possible to attribute various values of a weight present on the seat to various positions of the first harmonic of the current, **characterized in that** it comprises calculation elements linked to the harmonics analyzer and making it possible to determine the frequency corresponding to the maximum of the FOURIER transform of the operating current of the motor, the maximum being representative of a weight present on the seat.

2. Seat according to Claim 1, **characterized in that** the detector comprises a data storage means making it possible to keep available at least one table of concordance between various positions of the first harmonic of the current or various maxima of the FOURIER transform depending on the operating current of the motor, on the one hand, and weights liable to be present on the seat, on the other hand, and a comparator making it possible to determine the weight present on the seat with the aid of the values contained in the concordance table or tables.

3. Seat according to Claim 2, **characterized in that** the detector comprises input means making it possible to modify the values of the concordance table or tables.

4. Seat according to Claim 2, **characterized in that** the detector comprises selection means making it possible to choose, from among several concordance tables stored in the storage means, that which best corresponds to the type of load exerting a weight on the seat.

5. Seat according to any one of Claims 1 to 4, **characterized in that** the detector comprises a signal generator capable of generating a signal representative of the presence or absence of a weight on the seat, the presence of a weight on the seat being given on the basis of a predetermined minimum weight.

6. Seat according to Claim 5, **characterized in that** the signal generator is linked to authorization means intended to disable or to activate one or more items of equipment of the vehicle.

7. Seat according to any one of Claims 1 to 6, **characterized in that** the detector comprises a repeater intended to have the analysis of the operating current done a predetermined number of times before determining the weight present on the seat.

8. Seat according to any one of Claims 1 to 7, **characterized in that** the detector comprises means intended to force the seat into a base position before the start of the measurements of the current.

9. Seat according to any one of Claims 1 to 8, **characterized in that** the detector comprises means for storing the measurement results, these means making it possible to store the weight of customary loads exerting a weight on the seat.

10. Seat according to any one of Claims 1 to 9, **characterized in that** the detector comprises means intended to be linked to a commands memory storing adjustment instructions/values for passive-safety items of equipment capable of being adjusted in accordance with the weight of customary loads exerting a weight on the seat.

11. Vehicle **characterized in that** it comprises a seat according to any one of Claims 1 to 10.

12. Vehicle according to Claim 11, **characterized in that** it comprises a seat with position memory, this memory making it possible, after the measurement of the weight and together with appropriate adjustment means, to replace the seat into the adjusted position before the measurement.

13. Vehicle according to Claim 11 or 12,
**characterized in that** it comprises adjustment means intended to receive from the occupancy detector the weight of customary loads exerting a weight on the seat, these means being linked to input means allowing a user of the vehicle to obtain automatic adjustment of the position of the seat according to a customary load.

14. Method of measuring a weight present on an electrically adjustable seat in a motor vehicle, comprising a computer executing the following steps:
- measuring and sampling a current passing through a vertical displacement motor of the seat,
- calculating the FOURIER transform of the current over the frequency span ranging from 150 Hertz to 500 Hertz,
- determining the amplitude of the frequency corresponding to the maximum of the FOURIER transform,
- comparing the frequency having the maximum amplitude with thresholds stored in the computer,
- determining the corresponding weight or a corresponding weight category.

## Patentansprüche

1. Kraftfahrzeugsitz, der einen Detektor für die Belegung eines elektrisch verstellbaren Sitzes enthält, wobei der Sitz mit wenigstens einem Elektromotor versehen ist, um wenigstens eine vertikale Verlagerung des Sitzes zu erhalten, und der Detektor wenigstens einen Stromsensor, der ermöglicht, den Betriebsstrom des Motors zu messen, wenn der Motor betätigt wird, und einen Analysator für die Harmonischen des Betriebsstroms des Motors, der ermöglicht, verschiedenen Positionen der ersten Harmonischen des Stroms verschiedene Werte eines auf dem Sitz vorhandenen Gewichts zuzuschreiben, enthält, **gekennzeichnet durch** Rechenelemente, die mit dem Analysator für die Harmonischen verbunden sind und ermöglichen, die Frequenz zu bestimmen, die dem Maximum der Fourier-Transformation des Betriebsstroms des Motors entspricht, wobei das Maximum ein auf dem Sitz vorhandenes Gewicht repräsentiert.

2. Sitz nach Anspruch 1, **dadurch gekennzeichnet, dass** der Detektor ein Mittel zum Speichern von Daten, das ermöglicht, wenigstens eine Konkordanztabelle einerseits zwischen verschiedenen Positionen der ersten Harmonischen des Stroms oder verschiedenen Maxima der Fourier-Transformation je nach Betriebsstrom des Motors und andererseits Gewichten, die auf dem Sitz vorhanden sein können, zur Verfügung zu stellen, und einen Komparator, der ermöglicht, das auf dem Sitz vorhandene Gewicht mit Hilfe der Werte zu bestimmen, die in der oder den Konkordanztabellen vorhanden sind, enthält.

3. Sitz nach Anspruch 2, **dadurch gekennzeichnet, dass** der Detektor Erfassungsmittel enthält, die ermöglichen, die Werte der Konkordanztabelle(n) zu modifizieren.

4. Sitz nach Anspruch 2, **dadurch gekennzeichnet, dass** der Detektor Auswahlmittel enthält, die ermöglichen, unter mehreren in dem Speichermittel gespeicherten Konkordanztabellen jene auszuwählen, die dem Lasttyp, der auf den Sitz ein Gewicht ausübt, am besten entspricht.

5. Sitz nach einem der Ansprüche 1 bis 4, **dadurch gekennzeichnet, dass** der Detektor einen Signalgenerator enthält, der ein Signal erzeugen kann, das das Vorhandensein oder Fehlen eines Gewichts auf dem Sitz repräsentiert, wobei das Vorhandensein eines Gewichts auf dem Sitz anhand eines vorbestimmten Minimalgewichts gegeben ist.

6. Sitz nach Anspruch 5, **dadurch gekennzeichnet, dass** der Signalgenerator mit Autorisierungsmitteln verbunden ist, die dazu bestimmt sind, eine oder mehrere Anlagen des Fahrzeugs zu sperren oder zu aktivieren.

7. Sitz nach einem der Ansprüche 1 bis 6, **dadurch gekennzeichnet, dass** der Detektor eine Wiederholungseinrichtung enthält, die dazu bestimmt ist, eine Analyse des Betriebsstroms in einer vorbestimmten Anzahl auszuführen, bevor das auf dem Sitz vorhandene Gewicht bestimmt wird.

8. Sitz nach einem der Ansprüche 1 bis 7, **dadurch gekennzeichnet, dass** der Detektor Mittel enthält, die dazu bestimmt sind, den Sitz zwangsläufig in eine Grundposition zu bringen, bevor Messungen des Stroms beginnen.

9. Sitz nach einem der Ansprüche 1 bis 8, **dadurch gekennzeichnet, dass** der Detektor Mittel zum Speichern der Messergebnisse enthält, wobei diese Mittel ermöglichen, das Gewicht gewöhnlicher Lasten, die auf den Sitz ein Gewicht ausüben, zu speichern.

10. Sitz nach einem der Ansprüche 1 bis 9, **dadurch gekennzeichnet, dass** der Detektor Mittel enthält, die dazu bestimmt sind, mit einem Befehlsspeicher verbunden zu werden, der Einstellanweisungen/-werte für passive Sicherheitsanlagen, die entsprechend dem Gewicht gewöhnlicher Lasten, die ein Gewicht auf den Sitz ausüben, gesteuert werden können, speichert.

11. Fahrzeug, **dadurch gekennzeichnet, dass** es einen Sitz nach einem der Ansprüche 1 bis 10 enthält.

12. Fahrzeug nach Anspruch 11, **dadurch gekennzeichnet, dass** es einen Sitz mit Positionsspeicher enthält, wobei dieser Speicher nach dem Messen des Gewichts und zusammen mit geeigneten Einstellmitteln ermöglicht, den Sitz vor dem Messen in die eingestellte Position zurückzustellen.

13. Fahrzeug nach Anspruch 11 oder 12, **dadurch gekennzeichnet, dass** es Einstellmittel enthält, die dazu bestimmt sind, von dem Belegungsdetektor das Gewicht gewöhnlicher Lasten zu empfangen, die auf den Sitz ein Gewicht ausüben, wobei diese Mittel mit Erfassungsmitteln verbunden sind, die einem Anwender des Fahrzeugs ermöglichen, eine automatische Steuerung der Position des Sitzes entsprechend einer üblichen Last zu erhalten.

14. Verfahren zum Messen eines Gewichts, das auf einem elektrisch verstellbaren Sitz in einem Kraftfahrzeug vorhanden ist, der einen Rechner enthält, der die folgenden Schritte ausführt:
- Messen und Abtasten eines Stroms, der durch einen Motor für die vertikale Verlagerung des Sitzes fließt,
- Berechnen der Fourier-Transformation des Stroms in einem Frequenzbereich von 150 Hertz bis 500 Hertz,
- Bestimmen der Amplitude der Frequenz, die dem Maximum der Fourier-Transformation entspricht,
- Vergleichen der Frequenz, die die maximale Amplitude hat, mit Schwellenwerten, die in dem Rechner gespeichert sind,
- Bestimmen des Gewichts, das einer entsprechenden Gewichtskategorie entspricht.
